(19) Europäisches Patentamt
European Patent Office
Office européen des brevets

(11) **EP 3 795 331 B1**

(12) **EUROPÄISCHE PATENTSCHRIFT**

(45) Veröffentlichungstag und Bekanntmachung des Hinweises auf die Patenterteilung:
**24.12.2025  Patentblatt 2025/52**

(21) Anmeldenummer: **19198805.4**

(22) Anmeldetag: **20.09.2019**

(51) Internationale Patentklassifikation (IPC):
**B29C 55/00** *(2006.01)*     **C08J 5/18** *(2006.01)*
**C08K 5/14** *(2006.01)*

(52) Gemeinsame Patentklassifikation (CPC):
(C-Sets verfügbar)
**C08J 5/18; B29D 7/01;** B29C 55/005; B29C 55/02;
B29K 2023/0633; B29K 2023/0691; C08J 2323/04;
C08J 2323/10; C08K 5/14; C08L 2203/16;
C08L 2207/066; C08L 2312/00          (Forts.)

(54) **VERWENDUNG EINES POLYOLEFINS ALS ISOLATIONSMATERIAL**

USE OF A POLYOLEFIN AS INSULATION MATERIAL

UTILISATION D'UNE POLYOLÉFINE COMME MATÉRIAU ISOLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.03.2021  Patentblatt 2021/12**

(73) Patentinhaber: **Technische Universität Dortmund**
**44227 Dortmund (DE)**

(72) Erfinder:
• **Niedik, Christoph Felix**
**44137 Dortmund (DE)**
• **Jenau, Frank**
**44805 Bochum (DE)**
• **Katzenberg, Frank**
**59425 Unna (DE)**
• **Segiet, Dominik**
**44139 Dortmund (DE)**

(74) Vertreter: **Michalski Hüttermann & Partner Patentanwälte mbB**
**Kaistraße 16A**
**40221 Düsseldorf (DE)**

(56) Entgegenhaltungen:
EP-A1- 1 894 715      EP-A1- 3 098 059
EP-A1- 3 163 592      EP-A1- 3 202 825
EP-B1- 1 894 715      US-A- 3 033 727
US-A- 5 145 728       US-A1- 2013 288 000

(52) Gemeinsame Patentklassifikation (CPC): (Forts.)

C-Sets
C08K 5/14, C08L 23/0815

**Beschreibung**

Die vorliegende Erfindung bezieht sich auf das Gebiet der Polyolefine, insbesondere Polyolefine, die als Isolierstoffe z.B. in der Hochspannungstechnik eingesetzt werden.

Insbesondere in der Hochspannungstechnik werden vernetzte Polyolefine niedriger Dichte (meist Polyethylene, sog. x-LDPE) eingesetzt, da diese Stoffe sich oftmals durch eine geringe spezifische Leitfähigkeit und hohe Durchschlagsfestigkeit auszeichnen. Nachteile sind allerdings bei vielen Anwendungen undefinierte und nur selten reproduzierbare Raumladungsansammlungen unter Gleichfeldbelastungen, was eine gezielte Vorhersage der raumladungsbedingten Feldbelastung im Betrieb erschwert.

Orientierte Polyolefine sind unter anderem aus der EP 3 098 059 A1, US 5 145 728 A, US 3 033 727 A, US 2013/288000 A1, EP 3 202 825 A1, EP 1 894 715 A1, US 2013/288000 A1 und EP 3 202 825 A1 bekannt.

Es stellt sich somit die Aufgabe, Polyolefine zu schaffen, bei denen insbesondere die Raumladungsakkumulation verbessert, bzw. prognostizierbar ist.

Diese Aufgabe wird durch die Verwendung eines Polyolefins nach Anspruch 1 gelöst. Demgemäß wird die Verwendung eins Polyolefins als Isolationsmaterial vorgeschlagen, wobei das Polyolefin Polyethylen ist, das einen Quervernetzungsgrad zwischen $\geq 0{,}01\%$ bis $\leq 4\%$ und einen Orientierungsgrad von $\geq 25\%$ aufweist.

Der Quervernetzungsgrad wird dabei mittels Messung des Elastizitätsmoduls in der Schmelze gemäß der Neo-Hookeschen Elastizitätstheorie ermittelt werden.

Der Quervernetzungsgrad $x_c$ wird folgendermaßen über die Neo-Hooke-Gleichung bestimmt,

$$x_c = \frac{M_{rep} \cdot E(T) \cdot 100\,\%}{2(1 - \nu) \cdot \rho(T) \cdot R \cdot T}$$

wobei $M_{rep}$ dem Molekulargewicht der Wiederholungseinheit entspricht, $E(T)$ dem Speichermodul, $\nu$ der Poissonzahl, $p(T)$ der Dichte, R der universellen Gaskonstante und T der absoluten Temperatur. Die Bestimmung des Quervernetzungsgrads erfolgt für $T > T_m$.

Der Orientierungsgrad O wird mittels Weitwinkel-Röntgendiffraktometrie (WAXS) und der Auswertung der Aussichelung der Beugungsreflexe entlang des Azimuthalwinkels bestimmt werden. Dies geschieht durch Nutzung der Halbwertsbreite H der Intensitätsverteilung des berücksichtigten Peaks im WAXS-Beugungsbild gemäß des Formelzusammenhangs O=(180°-H)/180* 100%.

Gemäß einer bevorzugten Ausführungsform beträgt der Quervernetzungsgrad des Polyolefins zwischen $\geq 0{,}1\%$ bis $\leq 2\%$.

Gemäß einer bevorzugten Ausführungsform beträgt der Orientierungsgrad des Polyolefins zwischen $\geq 40\%$ und $\leq 100\%$, bevorzugt $\geq 50\%$, noch bevorzugt $\geq 60\%$.

Gemäß einer bevorzugten Ausführungsform ist das Polyolefin ausgewählt aus Low Density Polyethylen (LDPE), Linear Low Density Polyethylen (LLDPE), und High Density Polyethylen (HDPE), .

Gemäß einer bevorzugten Ausführungsform umfasst das Polyolefin LDPE und/oder LLDPE, bevorzugt besteht es im Wesentlichen daraus.

Im Sinne der vorliegenden Erfindung bedeutet dabei "im Wesentlichen" $\geq 95$ Gew-%, noch bevorzugt $\geq 97$ Gew-% sowie am meisten bevorzugt $\geq$ Gew-%.

Gemäß einer bevorzugten Ausführungsform beträgt die durchschnittliche zahlengewichtete Molmasse $M_n$ des Polyolefins $\geq 2.000$ g/mol bis $\leq 500.000$ g/mol, besonders bevorzugt $\geq 20.000$ g/mol bis $\leq 300.000$ g/mol

Gemäß einer bevorzugten Ausführungsform beträgt der Schmelzindex MFI (gemäß ISO 1133) des Polyolefins von $\geq 0{,}01$ g/10min bis $\leq 5$ g/10min, besonders bevorzugt $\geq 0{,}1$ g/10min bis $\leq 3$ g/10min.

Das Polymer wurde hergestellt nach einem Verfahren umfassend die Schritte:

    a) Vorlegen eines linearen Basispolyolefins
    b) Optionales Vernetzen des Basispolyolefins,
    c) Dehnen des Polyolefins
    d) Kontinuierliches Abkühlen
    e) Isothermes Kristallisieren

Die einzelnen Schritte des erfindungsgemäßen Verfahrens werden im Folgenden näher erläutert, wobei einzelne Merkmale beliebig miteinander kombinierbar sind:

Schritt a) Vorlegen eines linearen Basispolyolefins.

Bevorzugte Basispolyolefine sind hier insbesondere Polyethylene, insbesondere Low Density Polyethylen (LDPE), Linear Low Density Polyethylen (LLDPE), und High Density Polyethylen (HDPE).

Gemäß einer bevorzugten Ausführungsform beträgt die durchschnittliche zahlengewichtete Molmasse $M_n$ des Basispolyolefins ≥ 2.000 g/mol bis ≤ 500.000 g/mol, besonders bevorzugt ≥ 20.000 g/mol bis ≤ 300.000 g/mol.

Gemäß einer bevorzugten Ausführungsform beträgt der Schmelzindex MFI (gemäß ISO 1133) des Basispolyolefins von ≥ 0,01 g/10min bis ≤ 5 g/10min, besonders bevorzugt ≥ 0,1 g/10min bis ≤ 3 g/10min.

Das Basispolyolefin selbst kann nach allen bekannten Methoden aus dem Stand der Technik hergestellt werden.

Schritt b) Vernetzung (optional)

Schritt b) wird bis zu einem Quervernetzungsgrad ≥ 0,01% bis ≤ 4%, bevorzugt zwischen ≥ 0,1% bis ≤ 2%. durchgeführt. Der Quervernetzungsgrad kann dabei z.B. durch das Verhältnis von Basispolyolefin zu Quervernetzungsreagens (s. im Folgenden) eingestellt werden.

Schritt b) wird bevorzugt bei erhöhten Temperaturen durchgeführt, besonders bevorzugt sind hierbei Tempe-raturen von $T_m$ - 60°C bis ≤ $T_m$ + 120 °C, wobei $T_m$ die Schmelztemperatur des Basispolyolefins beträgt.

Schritt b) kann unter Zuhilfenahme eines Lösemittels oder auch lösemittelfrei erfolgen.

Schritt b) wird bevorzugt durch Zugabe eines Quervernetzungsreagens durchgeführt. Darunter wird ein Reagens verstanden, welches in der Lage ist, mit den linearen Polyolefinsträngen des Basispolyolefins zu reagieren und diese so querzuvernetzen.

Bevorzugte Quervernetzungsreagentien sind dabei ausgewählt aus der Gruppe enthaltend Peroxide, bevorzugt Dicumylperoxid, Di-tert-butylperoxid, Tert.-butylhydroperoxid, Percarbonat, Dibenzoylperoxid

Schritt c) Dehnen

In Schritt c) wird das in Schritt a) oder b) erhaltene Polymer um bevorzugt ≥ 5%, besonders bevorzugt ≥ 200%, ganz besonders bevorzugt auf ≥300%, sowie bevorzugt ≤1500% gedehnt.

Schritt c) kann je nach Anwendung bevorzugt uniaxial oder biaxial erfolgen.

Der Term "uniaxial" bedeutet und/oder umfasst dabei insbesondere entlang einer Vorzugsrichtung verstreckt. Der Term "biaxial" bedeutet und/oder umfasst dabei insbesondere entlang zweier Vorzugsrichtung verstreckt.

Schritt c) erfolgt dabei bevorzugt bei einer Dehnrate von ≥0,1 %/min bis ≤ 10000 %/min, bevorzugt von ≥1 %/min bis ≤ 1000 %/min.

Schritt c) erfolgt weiterhin bevorzugt bei einer mechanischen Spannung, bezogen auf den Probenquerschnitt von ≥0,001 MPa bis ≤ 100 MPa, besonders bevorzugt ≥0,1 MPa bis ≤ 30 MPa. Dies hat sich bei vielen Anwendungen besonders bewährt.

Gemäß einer bevorzugten Ausführungsform der Erfindung wird das in Schritt b) erhaltene Polymer auf eine Temperatur von bevorzugt $T_m$ - 60°C bis ≤ $T_m$ + 120 °C gebracht, wobei $T_m$ die Schmelztemperatur des Basispolyolefins in Schritt a) beträgt. Anschließend wird gedehnt.

Gemäß der vorliegenden Erfindung umfasst das Verfahren einen Schritt d), der nach Schritt c) durchgeführt wird:

d) Kontinuierliches Abkühlen oder isothermes Kristallisieren

In Schritt d) wird das Polymer entweder, z.B. durch Kontakt mit einem Kühlmedium mit einer Temperatur von bevorzugt ≥ 20°C bis ≤ $T_m$ - 20°C bevorzugt kontinuierlich abgekühlt, oder bevorzugt isotherm bei einer Temperatur zwischen 20°C und $T_m$ - 5°C kristallisiert.

Gemäß der vorliegenden Erfindung umfasst das Verfahren einen Schritt e), der nach Schritt c) und/oder d) durchgeführt wird:

e) Isothermes Kristallisieren

In Schritt e) wird das Polymer bevorzugt isotherm bei einer Temperatur zwischen 20°C und $T_m$ - 5°C kristallisiert.

Die vorliegende Erfindung bezieht sich auf die Verwendung eines erfindungsgemäßen Polyolefins als Isolationsmaterial, insbesondere bei

- Hochspannungsanwendungen
- Kabelanfertigungen
- Dielektrikum in Kondensatoranwendungen

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele des erfindungsgemäßen Polymers und des erfindungsgemäßen Verfahrens dargestellt sind.

LDPE wurde mit ca. 0,2% Dicumylperoxid (DCP) im Extruder bei einer Temperatur von 130 °C gemischt, die resultierende Quervernetzung betrug 0,13 %.

Das Extrudat wurde anschließend in einer Heizpresse bei einer Temperatur von 180 °C mit Hilfe von Abstandhaltern zu $500\,\mu m$ dicken Folien verpresst und durch 20 minütige Temperung vernetzt. Zur Orientierung der erhaltenen vernetzen LDPE Folien wurden diese auf einer 160 °C heißen Heizplatte temperiert und anschließend auf relative Dehnungen von 100 bis 900% (bzw. Verstreckgrade $\lambda$ von 2 bis 10) gedehnt und anschließend auf einer zweiten Heizplatte mit einer Temperatur von 80 °C kristallisiert.

Die elektrischen Eigenschaften der vernetzten LDPE-Folien wurden anschließend mittels LCR-Meter und gepulst-elektroakustischer Methode ermittelt. Zur Bewertung der Raumladungsakkumulation wurde ein elektrisches Gleichfeld $\leq 40$ kV/mm für Belastungszeiten $\geq 3000$ s appliziert und anschließend die gespeicherte Raumladungsmenge ermittelt.

Die folgende Tabelle zeigt die erzielten Ergebnisse:

| Verstreckgrad $\lambda$ | O | Permittivität $\varepsilon_r$ | Gespeicherte Raumladungsmenge $N/N_{max}$ |
|---|---|---|---|
| 1 | 0 | 2,3 | 1 |
| 2 | 61,33 | 2,13 | 0,62-0,80 |
| 3 | 66,66 | | |
| 4 | 81,22 | 2,09 | 0,45-0,63 |
| 5 | 87,89 | | |
| 6 | 87,55 | 1,96 | <0,4 |
| 7 | 92 | | |
| 8 | 93,3 | 1,87 | <0,4 |
| 9 | 96,67 | | |
| 10 | 98,89 | 1,95 | <0,4 |

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen. Entsprechend ist die obengenannte Beschreibung beispielhaft und nicht als beschränkend anzusehen. Das in den Ansprüchen verwendete Wort "umfassen" schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werde kann. Der Umfang der Erfindung ist in den folgenden Ansprüchen definiert und den dazugehörigen Äquivalenten.

**Patentansprüche**

**1.** Verwendung eines Polyolefin, wobei das Polyolefin Polyethylen ist, das einen Quervernetzungsgrad zwischen $\geq$ 0,01% bis $\leq$ 4% und einen Orientierungsgrad von $\geq$ 25% aufweist, als Isolationsmaterial,

wobei das Polyolefin hergestellt wurde nach einem Verfahren umfassend die Schritte:

a) Vorlegen eines linearen Basispolyolefins
b) Optionales Vernetzen des Basispolyolefins
c) Dehnen des Polymers
d) Kontinuierliches Abkühlen
e) Isothermes Kristallisieren,

wobei der Quervernetzungsgrad $x_c$ gemäß der folgenden Gleichung bestimmt wurde:

$$x_c = \frac{M_{rep} \cdot E(T) \cdot 100\%}{2(1-\nu) \cdot \rho(T) \cdot R \cdot T}$$

wobei $M_{rep}$ dem Molekulargewicht einer Wiederholungseinheit entspricht, E(T) dem Speichermodul, v der Poissonzahl, p(T) der Dichte, R der universellen Gaskonstante und T der absoluten Temperatur, wobei T > $T_m$ und $T_m$ die Schmelztemperatur des Basispolyolefins ist,
und wobei der Orientierungsgrad O mittels Weitwinkel-Röntgendiffraktometrie aus der Halbwertsbreite H der Intensitätsverteilung der Beugungsreflexe entlang des Azimuthalwinkels gemäß der folgenden Formel bestimmt wurde:

$$O = (180°\text{-}H)/180*100\%.$$

2. Verwendung nach Anspruch 1, wobei das Polyolefin ausgewählt ist aus Low Density Polyethylen (LDPE), Linear Low Density Polyethylen (LLDPE), und High Density Polyethylen (HDPE).

3. Verwendung nach einem der Ansprüche 1 bis 2, wobei der Orientierungsgrad des Polyolefins zwischen $\geq$ 40% und $\leq$ 100% beträgt

4. Verwendung nach einem der Ansprüche 1 bis 3, wobei die durchschnittliche zahlengewichtete Molmasse des Polyolefins $\geq$ 2.000 g/mol bis $\leq$ 500.000 g/mol beträgt

5. Verwendung nach einem der Ansprüche 1 bis 4, wobei der Schmelzindex MFI (gemäß ISO 1133) des Polyolefins von $\geq$ 0,01 g/10min bis $\leq$ 5 g/10min beträgt.

6. Verwendung nach einem der Ansprüche 1 bis 5, wobei die durchschnittliche Molmasse des Basispolyolefins $\geq$ 2.000 g/mol bis $\leq$ 300.000 g/mol beträgt.

7. Verwendung nach einem der Ansprüche 1 bis 6, wobei der Schmelzindex MFI (gemäß ISO 1133) des Basispolyolefins von $\geq$ 0,01 g/10min bis $\leq$ 5 g/10min beträgt.

8. Verwendung nach einem der Ansprüche 1 bis 7, wobei in Schritt c) das in Schritt a) oder b) erhaltene Polymer um $\geq$ 5% bis $\leq$ 1500% gedehnt wurde.

9. Verwendung nach einem der Ansprüche 1 bis 8, wobei Schritt c) bei einer Dehnrate von $\geq$ 0,1 %/min bis $\leq$ 10000 %/min erfolgt.

10. Verwendung nach einem der Ansprüche 1 bis 9, wobei Schritt b) bevorzugt bei einer Temperatur in einem Bereich von $T_m$ - 60°C bis $\leq$ $T_m$ + 120 °C durchgeführt wurde.

11. Verwendung nach einem der Ansprüche 1 bis 10, wobei in Schritt e) das Polymer bevorzugt isotherm bei einer Temperatur zwischen 20°C und $T_m$ - 5°C kristallisiert wurde.


**Claims**

1. Use of a polyolefin, wherein the polyolefin is polyethylene having a degree of cross-linking between $\geq$ 0.01% and $\leq$ 4% and an orientation degree of $\geq$ 25%, as an insulation material,

   wherein the polyolefin being produced by a process comprising the steps:

   a) Presentation of a linear base polyolefin
   b) Optional crosslinking of the base polyolefin
   c) Stretching the polymer
   d) Continuous cooling

e) Isothermal crystallisation,

wherein the degree of cross-linking $x_c$ was determined according to the following equation:

$$x_c = \frac{M_{rep} \cdot E(T) \cdot 100\,\%}{2(1-\nu) \cdot \rho(T) \cdot R \cdot T}$$

wherein $M_{rep}$ corresponds to the molecular weight of a repeating unit, $E(T)$ to the storage modulus, $\nu$ to the Poisson's ratio, $p(T)$ to the density, R to the universal gas constant and T to the absolute temperature, wherein $T > T_m$ and $T_m$ is the melting temperature of the base polyolefin,
and wherein the degree of orientation O was determined by wide-angle X-ray diffractometry from the half-width H of the intensity distribution of the diffraction reflections along the azimuthal angle according to the following formula:

$$O = (180°\text{-}H)/180*100\%.$$

2. Use according to claim 1, wherein the polyolefin is selected from Low Density Polyethylene (LDPE), Linear Low-Density Polyethylene (LLDPE), and High-Density Polyethylene (HDPE).

3. Use according to any one of claims 1 to 2, wherein the degree of orientation of the polyolefin is between $\geq 40\%$ and $\leq 100\%$

4. Use according to any one of claims 1 to 3, wherein the average number-weighted molar mass of the polyolefin is $\geq 2,000$ g/mol to $\leq 500,000$ g/mol

5. Use according to any one of claims 1 to 4, wherein the melt flow index MFI (according to ISO 1133) of the polyolefin is from $\geq 0.01$ g/10min to $\leq 5$ g/10min.

6. Use according to any one of claims 1 to 5, wherein the average molar mass of the base polyolefin is $\geq 2,000$ g/mol to $\leq 300,000$ g/mol.

7. Use according to any one of claims 1 to 6, wherein the melt flow index MFI (according to ISO 1133) of the base polyolefin is from $\geq 0.01$ g/10min to $\leq 5$ g/10min.

8. Use according to any one of claims 1 to 7, wherein in step (c) the polymer obtained in step (a) or (b) was stretched by $\geq 5\%$ to $\leq 1500\%$.

9. Use according to any one of claims 1 to 8, wherein step (c) is carried out at a strain rate of $\geq 0.1\,\%$/min to $\leq 10000\%$/min.

10. Use according to any one of claims 1 to 9, wherein step (b) was preferably carried out at a temperature in a range of $T_m - 60°C$ to $\leq T_m + 120\,°C$.

11. Use according to any one of claims 1 to 10, wherein in step (e) the polymer is preferably crystallised isothermally at a temperature between 20°C and $T_m - 5°C$.

**Revendications**

1. Utilisation d'une polyoléfine, dans laquelle la polyoléfine est du polyéthylène, présentant un degré de réticulation compris entre $\geq 0,01\,\%$ et $\leq 4\,\%$ et un degré d'orientation de $\geq 25\,\%$, en tant que matériau isolant,

dans laquelle la polyoléfine étant préparée selon un procédé comprenant les étapes suivantes :

    a) Présentation d'une polyoléfine à base linéaire
    b) Réticulation optionnelle de la polyoléfine de base
    c) Étirement du polymère

d) Refroidissement continu
e) Cristallisation isotherme,

dans laquelle le degré de réticulation $x_c$ a été déterminé selon l'équation suivante:

$$x_c = \frac{M_{rep} \cdot E(T) \cdot 100\ \%}{2(1-\nu) \cdot \rho(T) \cdot R \cdot T}$$

où $M_{rep}$ correspond à la masse moléculaire d'une unité répétitive, E(T) au module de stockage, v au coefficient de Poisson, p(T) à la masse volumique, R à la constante universelle des gaz et T à la température absolue, dans laquelle $T > T_m$ et $T_m$ est la température de fusion de la polyoléfine de base,
et dans laquelle le degré d'orientation O a été déterminé par diffractométrie des rayons X à grand angle à partir de la demi-largeur H de la distribution d'intensité des réflexions de diffraction le long de l'angle azimutal selon la formule suivante:

$$O = (180°\text{-}H)/180*100\ \%.$$

2. Utilisation de la revendication 1, dans laquelle la polyoléfine est choisie parmi le polyéthylène basse densité (PEBD), le polyéthylène basse densité linéaire (PEBDL), et le polyéthylène haute densité (PEHD).

3. Utilisation selon l'une quelconque des revendications 1 à 2, dans laquelle le degré d'orientation de la polyoléfine est compris entre $\geq 40\ \%$ et $\leq 100\ \%$

4. Utilisation selon l'une quelconque des revendications 1 à 3, dans laquelle la masse molaire moyenne pondérée en nombre de la polyoléfine est comprise entre $\geq 2\ 000$ g/mol et $\leq 500\ 000$ g/mol

5. Utilisation selon l'une des revendications 1 à 4, dans laquelle l'indice de fluidité à chaud MFI (selon ISO 1133) de la polyoléfine est compris entre $\geq 0,01$ g/10min et $\leq 5$ g/10 min.

6. Utilisation selon l'une quelconque des revendications 1 à 5, dans laquelle la masse molaire moyenne de la polyoléfine de base est comprise entre $\geq$ de $2\ 000$ g/mol et $\leq 300\ 000$ g/mol.

7. Utilisation selon l'une quelconque des revendications 1 à 6, dans laquelle l'indice de fluidité à chaud MFI (selon ISO 1133) de la polyoléfine de base est compris entre $\geq 0,01$ g/10min et $\leq 5$ g/10min.

8. Utilisation selon l'une quelconque des revendications 1 à 7, dans laquelle, à l'étape (c), le polymère obtenu à l'étape (a) ou (b) a été étiré de $\geq 5\ \%$ à $\leq 1500\ \%$.

9. Utilisation selon l'une quelconque des revendications 1 à 8, dans laquelle l'étape (c) est réalisée à une vitesse de déformation de $\geq 0,1\ \%$/min à $\leq 10000\ \%$/min.

10. Utilisation selon l'une quelconque des revendications 1 à 9, dans laquelle l'étape (b) a été réalisée de préférence à une température comprise entre $T_m - 60°C$ et $\leq T_m + 120\ °C$.

11. Utilisation selon l'une quelconque des revendications 1 à 10, dans laquelle à l'étape (e), le polymère est de préférence cristallisé de manière isotherme à une température comprise entre 20°C et $T_m - 5°C$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3098059 A1
- US 5145728 A
- US 3033727 A

- US 2013288000 A1
- EP 3202825 A1
- EP 1894715 A1